# EUROPÄISCHE PATENTSCHRIFT

(11) **EP 0 385 141 B1**
(45) Veröffentlichungstag und Bekanntmachung des Hinweises auf die Patenterteilung: **23.11.1994**
(21) Anmeldenummer: 90102325.9
(22) Anmeldetag: 06.02.1990
(51) Int. Cl.: B29C 61/06, B29C 61/10, H02G 15/18

(54) **Wärmeschrumpfende Umhüllung**
Heat-shrinkable wrapping
Gaine thermorétrécissable

(30) Priorität: 03.03.1989 GB 8904837; 24.07.1989 GB 8916846
(43) Veröffentlichungstag der Anmeldung: 05.09.1990
(73) Patentinhaber: RXS Schrumpftechnik-Garnituren GmbH, D-58093 Hagen (DE)
(72) Erfinder: Robinson, Joseph-Gordon, Dr., Cheltenham, Glos. GL54 5QR (GB)
(74) Vertreter: Fuchs, Franz-Josef, Dr.-Ing.

(56) Entgegenhaltungen:
- EP-A- 0 120 475
- DE-A- 2 640 582
- DE-A- 3 319 120
- FR-A- 2 512 394
- US-A- 4 016 356
- US-A- 4 121 011

## Beschreibung

Die Erfindung betrifft eine wärmeschrumpfende Umhüllung, insbesondere für Verbindungsstellen von Nachrichtenkabeln mit einer gewellten Einlage und Aufwölbungen mit Nuten an den Längskanten, in welche eine flexible Metallschiene greift, die die Längskanten beim Schrumpfprozeß zusammenhält.

Gelegentlich ist es notwendig, Nachrichten- oder andere Kabel zu reparieren. Da hierzu ein Teil des schützenden Kabelmantels entfernt wird, muß die neue Verbindungsstelle mit einer Umhüllung geschützt werden, die über die lange Lebensdauer des Kabels hinweg das Eindringen von Feuchtigkeit und mechanische Beschädigungen verhindern muß.

Die Verbindungsstelle eines Nachrichtenkabels kann gegen eindringende Feuchtigkeit geschützt werden, indem sie mit einer kleberbeschichteten, wärmeschrumpfenden Manschette umhüllt wird, die sich bis auf die ein- und austretenden Kabel erstreckt, wie in dem britischen Patent GB-A-1,506,242 beschrieben ist. Die Längskanten der Manschette werden durch eine flexible C-geformte Metallschine fest zusammengehalten. Bei Erhitzen, z.B. mit einem Propangasbrenner, schrumpft die Manschette und bildet zusammen mit dem auf ihrer Innenseite befindlichen Kleber einen wasserdichten Schutz für die Verbindungsstelle. Die Wirksamkeit solcher Umhüllungen für Verbindungsstellen kann nachgewiesen werden, indem sie einem Überdruck von ca. 0,42 kp/cm² (6 psi) und Temperaturzyklen in Wasser von 5° C bis 60° ausgfesetzt werden. Bei guten Verbindungen sollte der Druckverlust nach 10 Zyklen nicht größer als 1 psi sein, wobei jeder Zyklus vier Stunden dauert. Diese Art von Versuch wird durchgeführt, um die bei Verbindungsstellen an Aufteilungskabeln verwendeten Umhüllungen auszuwerten, selbst wenn diese Kabel normalerweise nicht drucküberwacht werden.

Bei Nachrichtenübertragungssystemen werden die Kabel normalerweise mit 0,7 kp/cm² (10 psi) drucküberwacht, um sicherzustellen, daß selbst bei Beschädigung kein Wasser eintritt. Die oben genannte Umhüllung ist auch zum Reparieren von Verbindungsstellen für übertragungsleitungen geeignet, wobei die Kabel einem Überdruck von 10 psi und Temperaturzyklen in Luft von - 40° C bis + 60° C ausgesetzt werden. Nach 10 Zyklen, von denen jeder Zyklus acht Stunden dauert, darf kein meßbarer Druckverlust feststellbar sein. Es werden auch andere Temperaturzyklusprüfungen zum Nachweis, daß durch die Umhüllung der Verbindungsstelle keine Luft entweichen kann, durchgeführt. Eine weitere, besonders hohe Anforderung besteht darin, daß die Umhüllung bei drucküberwachten Kabeln eine ausgezeichnete Dauerstandfestigkeit aufweisen muß, so daß sie, ideal für die Lebensdauer des Kabels, nicht verrutscht oder verformt.

Um den hohen Anforderungen zu genügen, die an die Umhüllung einer Verbindungsstelle bei drucküberwachten Nachrichtenkabeln gestellt werden, wurden viele Systeme angewandt. Um die Verbindungsstelle herum wurden zum Beispsiel Stahlhalbschalen mit Durchführungstüllen zusammenmgeschraubt und kleberbeschichtete Bänder zum Abdichten der aus- und eintretenden Kabel verwendet. Diese Art der Umhüllung hat den Nachteil, daß sie starr ist, nur schwer montiert werden kann und die Lagerhaltung vieler unterschiedlicher Größen erfordert, um die gebräuchlichen Kabelgrößen abzudecken.

Im nächstkommenden Stand der Technik gemäß der deutschen Offenlegungsschrift DE-A- 33 19 120 wird eine Kabelmuffe beschrieben, die als Schrumpfmanschette ausgebildet ist. Sie besitzt im Inneren eine gewellte Einlage, deren Wellen in Längsrichtung der Kabelmuffe verlaufen. Beim Schrumpfvorgang werden die längsverlaufenden Wellen der in einer beim Erwärmen schmelzenden Schmelzkleberschicht eingelagerten Einlage zusammengeschoben.

In der deutschen Offenlegungsschrift DE-A 26 40 582 wird ein Verfahren zur Herstellung einer Schrumpffolie beschrieben, bei dem eine Luftpolsterfolie mit der Schrumpffolie verbunden wird. Die Luftpolsterfolie ist partiell mit der Schrumpffolie verbunden. Auch hier findet bei der Schrumpfung infolge der leichten Verformbarkeit der Luftpolsterfolie eine Anpassung statt.

In der französischen Patentschrift FR-A- 25 12 394 wird eine schrumpfbare Kabelmuffe aufgezeigt, die auf eine Spleißstelle aufgeschrumpft wird. Im Dichtungsbereich wird hier ein separates Dichtungsband eingeführt.

Für vorliegende Erfindung besteht die Aufgabe, eine Umhüllung für eine Verbindungsstelle zu schaffen, die in einfacher Weise die Nachteile des Standes der Technik überwindet, wobei die genannten hohen Bedingungen für drucküberwachte Nachrichtenkabel erfüllt werden müssen. Die gestellte Aufgabe wird nun mit einer wärmeschrumpfbaren Umhüllung der eingangs erläuterten Art dadurch gelöst, daß die gewellte Einlage aus Kunststoff besteht und in Sandwich-Form zwischen zwei weiteren Kunststofflagen (2, 4) angeordnet ist und daß die Wellen quer über die gesamte Fläche der Einlage zwischen den genuteten Aufwölbungen an beiden Längskanten verlaufen.

Weitere vorteilhafte Ausgestaltungen der Erfindung sind in den Unteransprüchen beschrieben.

Die Erfindung wird anhand von fünf Figuren näher erläutert:
- Figur 1: zeigt die Umhüllung im geöffneten Zustand.
- Figur 2: zeigt die Umhüllung im geschlossenen Zustand.
- Figur 3: zeigt eine erste Ausführungsform der gewellten Einlage.
- Figur 4: zeigt eine zweite Ausführungsform der gewellten Einlage.
- Figur 5: zeigt eine dritte Ausführungsform der gewellten Einlage.

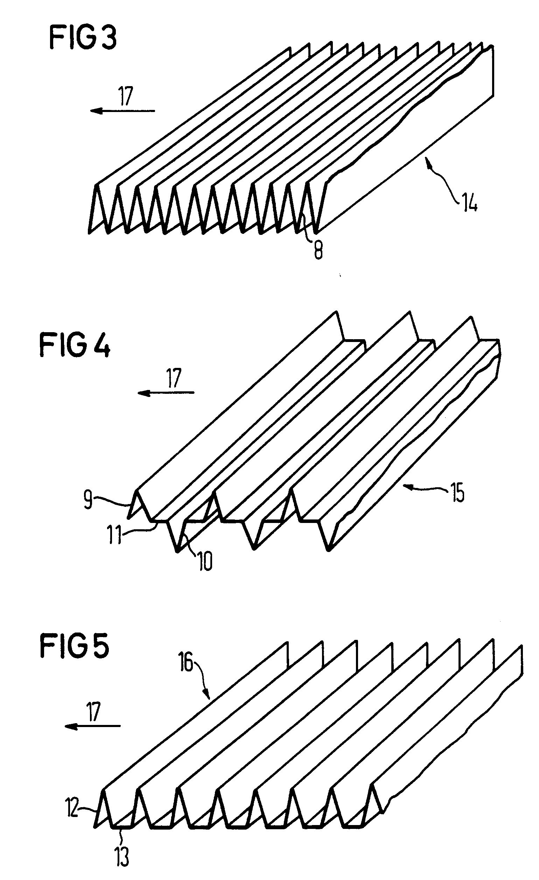

Die mehrschichtige Konstruktion aus Polyolefin besteht aus einer wärmeschrumpfenden, gewellten oder gefurchten Einlage, die eingelagert ist zwischen zwei ebenen Lagen 2 und 4 aus Kunststoff, die im folgenden als Matrix bezeichnet werden. Die Wellen 8, 9, 10, 12 oder Furchen verlaufen im wesentlichen parallel zueinander und reichen von der oberen bis zur unteren Begrenzung der Einlage 14, wobei Wellenberg 8 und Wellental jeweils abwechselnd direkt aufeinander folgen, wie in Abbildung 3 dargestellt. Alternativ dazu kann der Fortlauf von Wellenberg 9 und Wellental 10, wie in Figur 4 jeweils mit einem Absatz 11 unterbrochen sein oder es kann, wie Figur 5 darstellt, ein definierter lateraler Versatz 13 zwischen den Furchen oder Wellen 12 eingefügt sein. Die Wellen oder Furchen können im zur Längsrichtung der Wellen oder Furchen rechtwinkelig verlaufenden Schnittbild dreieckig, parabolisch, aus Kreissegmenten zusammengesetzt oder aus einer Kombination aus zwei oder drei dieser Formen geformt sein oder sogar eine unregelmäßige Form haben.

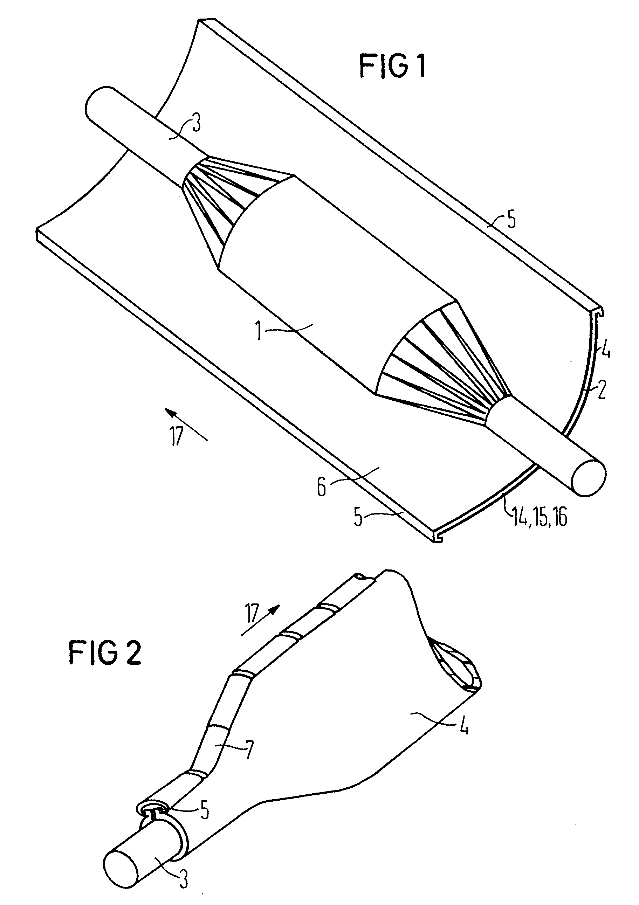

Die Wellen 8, 9, 10, 12 oder Furchen bedecken vorzugsweise die gesamte Oberfläche der inneren wärmeschrumpfenden Einlage, mit Ausnahme der genuteten Aufwölbung 5 (Figur 1) an jeder Kante, deren Oberflächen glatt sind und bei Montage über der Verbindungsstelle von einer C-geformten Metallschiene 7 (Figur 2) zusammengehalten werden. Die Wellen oder Furchen verlaufen vorzugsweise entsprechend den Richtungspfeilen 17 in den Abbildungen in einem Winkel von 90° zu den Längskanten der wärmeschrumpfenden Einlage, es kann jedoch auch jeder andere Winkel zu den Längskanten genommen werden. Die Matrix 2 - 4 und die gewellte oder gefurchte Einlage 14, 15, 16 sollten vorzugsweise ähnliche chemische und wärmeschrumpfende Eigenschaften haben. Geeignete Materialien sind: "high density polyethylene" (PE-HD) für die gewellte oder gefurchte Einlage und "low density polyethylene" (PE-LD) für die Kunststofflagen 2 und 4 auf beiden Seiten der gewellten Einlage 14, 15, 16. Es können jedoch auch andere geeignete Materialpaarmengen ausgewählt werden.

An dieser Konstruktion aus einer wärmeschrumpfenden gewellten oder gefurchten Polymer-Einlage 14, 15, 16, die (mit Ausnahme der genuteten Aufwölbungen 5 an jeder Kante der jeweiligen Einlage 14, 15, oder 16) zwischen zwei Lagen 2 und 4 aus PE-LD eingebettet ist, wurde festgestellt, daß die somit entstandene wärmeschrumpfende Manschette, wenn sie mit Kleber 6 beschichtet ist und bei einem Nachrichtenübertragungskabel über einen um die Reparaturstelle gewickelten Spleißschutz geschrumpft wird, während des Erhitzens eine hervorragende Reißfestigkeit bewies und durch hohen Innendruck hervorgerufene Umfangskräfte ohne nennenswertes Kriechen oder Verformung standhielt und eine ausgezeichnete Druckdichtigkeit aufwies. Eine ähnliche mehrschichtige Konstruktion, jedoch in Rohrform, könnte ebenfalls in zufriedenstellender Weise zum Schutz von Verbindungsstellen bei drucküberwachten Übertragungskabeln verwendet werden, vorausgesetzt, sie kann über das zur Verbindungsstelle führende Kabel geschoben werden.

Die Einlage 14, 15 oder 16 aus PE-HD wird mit einer kontinuierlichen Aufwölbung 5 (Figur 1) an jeder Längskante 17 extrudiert. Während die Temperatur des polymeren Extrudats oberhalb des Kristallschmelzpunktes gehalten wird, wird die Wellung zwischen den Aufwölbungen der Einlage vorgenommen.

Die somit entstandene gewellte Einlage 14, 15 oder 16 wird wärmeschrumpfbar gemacht, indem sie gereckt wird, vorzugsweise um 200 % bis 700 % im rechten Winkel zu ihren Längskanten und bei einer Temperatur unterhalb des Kristallitschmelzpunktes des Polymers. Diese gewellte Einlage wird dann durch Bestrahlung mit einer Dosis von 2 bis 30 Mrad vernetzt. Alternativ dazu, jedoch weniger zu empfehlen, wird die extrudierte PE-HD Einlage nach Wellung bei einer Temperatur oberhalb des Kristallitschmelzpunktes des Polymers mit einer Dosis von 2 bis 30 Mrad oder vorzugsweise 5 bis 20 Mrad bestrahlt und dann über den Kristallitschmelzpunkt erhitzt und um 200 % bis 700 % im rechten Winkel zu den Längskanten gereckt. Im gereckten Zustand wird das Expandat auf unter 80° C abgekühlt, wodurch die gewünschte wärmeschrumpfende Einlage entsteht.

Die wärmeschrumpfende gewellte Einlage aus PE-HD kann alternativ dazu auch so hergestellt werden, daß die extrudierte Einlage vorzugsweise um 200 % bis 700 % im rechten Winkel zu ihren Längskanten gereckt wird und anschließend die Wellung auf die Oberfläche (zwischen den Aufwölbungen 5 an den Längskanten) aufgebracht wird. In diesem Fall werden beide Arbeitsgänge, Recken und Wellung, unterhalb des Kristallitzschmelzpunktes des PE-HD ausgeführt. Die somit entstandene Einlage wird mit einer Dosis von 2 bis 30 Mrad oder vorzugsweise von 5 bis 20 Mrad bestrahlt.

In einem anderen Herstellungsverfahren wird das Extrudat aus PE-HD mit kontinuierlichen Aufwölbungen 5 (Figur 1) an den Längskanten zuerst durch Bestrahlung mit einer Dosis von 2 bis 30 Mrad oder vorzugsweise 5 bis 20 Mrad vernetzt. Es wird dann über den Kristallitschmelzpunkt des Polyethylens hinaus erhitzt und um 200 % bis 700 % im rechten Winkel zu den Längskanten gereckt. Dann wird die Wellung auf die Oberfläche aufgebracht, wobei die Temperatur weiterhin über dem Kristallitschmelzpunkt gehalten wird. Im gereckten Zustand wird das Expandat danach auf unter 80° C abgekühlt, damit die gewünschte wärmeschrumpfende Einlage aus PE-HD entsteht.

Vor dem Recken um 200 % bis 700 % liegt die Gesamtdicke der dieser Erfindung zugrundeliegenden gewellten Einlage aus PE-HD zwischen 0,5 mm und 15 mm und vorzugsweise zwischen 1,5 mm und 10 mm, gemessen von der Oberseite des Wellenberges bis zur Unterseite des angrenzenden Wellentales. Die Materialdicke der gewellten Einlage selbst liegt vorzugsweise zwischen 0,02 mm und 5 mm oder noch besser zwischen 0,2 mm und 3,5 mm, wobei der Abstand zwischen den Wellenbergen vorzugsweise zwischen 0,25 mm und 30 mm oder noch besser zwischen 3 mm und 15 mm liegt, insbesondere, wenn, wie in Figur 3 gezeigt, das Wellental direkt ohne Unterbrechung auf den Wellenberg folgt. In anderen Fällen, wie in den Figuren 4 und 5 dargestellt, kann der optimale Abstand zwischen den Wellen unterschiedlich sein. Er hängt vom Profil der Wellenform und von der Dicke des für die gewellte Einlage verwendeten Materials ab. Der Fachmann auf diesem Gebiet wird jeweils den geeigneten Abstand wählen.

Sowohl auf die Ober- als auch auf die Unterseite der dieser Erfindung zugrundeliegenden gewellten wärmeschrumpfenden Einlage aus PE-HD wird durch Laminieren oder Pulverbeschichtung oder Schmelzextrusion oder andere geeignete Techniken eine Lage aus PE-LD aufgebracht. Die Lücken und/oder Rinnen zwischen den Wellen werden dadurch mit PE-LD gefüllt, das vorzugs- aber nicht notwendigerweise die gesamten Wellentäler oder Rinnen füllt. Die Gesamtdicke des wärmeschrumpfenden Sandwiches liegt vorzugsweise zwischen 1,5 mm und 10 mm. Das warmeschrumpfende Sandwich wird dann durch Bestrahlung in einer Elektronenbeschleunigungsanlage oder mit Gamma-Strahlen vernetzt, um zu verhindern, daß die Lagen aus PE-LD beim Schrumpfvorgang schmelzen, zerlaufen oder abtropfen. Die bevorzugte Strahlendosis liegt zwischen 1 und 10 Mrad oder noch besser zwischen 2 und 5 Mrad.

Auf die Aufwölbungen 5 (Figur 1) an den beiden Längskanten wird besser kein PE-LD aufgebracht. Die vorliegende Erfindung schließt das Aufbringen von Polyethylen auf die Aufwölbungen jedoch nicht aus. Es könnte für den Herstellungsprozeß aber praktischer sein, dies zu vermeiden.

Das der Erfindung zugrundeliegende wärmeschrumpfende Polyolefin-Sandwich kann auch in einem sogenannten halbkontinuierlichen Verfahren hergestellt werden. Die Einlage 14, 15 bzw. 16 aus PE-HD mit kontinuierlichen Aufwölbungen 5 (Figur 1) an jeder Längskante wird bei Verwendung eines konventionellen Kunststoffextruders durch ein Profilwerkzeug extrudiert. Während die Temperatur noch oberhalb des Kristallitschmelzpunktes liegt, werden die Wellen in das Polymer-Extrudat zwischen den beiden seitlichen Aufwölbungen 5 eingedrückt, vorzugsweise im rechten Winkel zur Längsachse oder aber in jedem beliebigen Winkel zur Längsachse. Das gewellte Extrudat wird dann bis unter den Kristallitschmelzpunkt des Polymers abgekühlt, und zwar vorzugsweise auf unter 25° C. Auf die Unter- und Oberseite der gewellten Einlage wird dann PE-LD aufgebracht, vorzugsweise jedoch nicht auf die beiden seitlichen Aufwölbungen 5. Dies geschieht zum Beispiel durch Extrusionsbeschichtung unter Verwendung eines Extruders mit Querkopf oder auf andere Weise. Die Lücken und Rinnen werden dadurch mit PE-LD gefüllt und bedecken vorzugs- aber nicht notwendigerweise vollständig die Wellen. Das somit entstandene Polyolefin-Sandwich wird dann mit einer Dosis von 2 bis 30 Mrad oder vorzugsweise 5 bis 20 Mrad bestrahlt. Es wird dann über den Kristallitschmelzpunkt des PE-HD hinaus erhitzt und um 200 % bis 700 % im rechten Winkel zu den Längskanten gereckt. Im gereckten Zustand wird das Extrudat auf unter 80° C abgekühlt, wodurch die gewünschte wärmeschrumpfende Manschette entsteht. Alternativ dazu kann die Einlage 14, 15 bzw. 16 aus PE-HD nach der Wellung bei einer Temperatur oberhalb des Kristallitzschmelzpunktes auf Raumtemperatur abgekühlt und mit einer Dosis von 2 bis 20 Mrad oder vorzugsweise 5 bis 15 Mrad bestrahlt werden. Das PE-LD wird dann durch Extrusionsbeschichtung oder auf andere Weise auf die Ober- und Unterfläche der vernetzten gewellten Einlage 14, 15 bzw. 16 aufgebracht, vorzugsweise nicht jedoch auf die seitlichen Aufwölbungen 5. Die Lücken und Rinnen werden dadurch mit PE-LD gefüllt und bedecken vorzugs- aber nicht notwendigerweise vollständig die Wellen. Das somit entstandene Polyolefin-Sandwich wird dann mit einer Dosis von 1 bis 10 Mrad oder vorzugsweise 2 bis 5 Mrad bestrahlt. Sie wird dann über den Kristallitschmelzpunkt des PE-HD hinaus erhitzt und um 200 % bis 700 % im rechten Winkel zu den Längskanten gereckt. Im gereckten Zustand wird die Lage auf unter 80° C abgekühlt, wodurch die gewünschte wärmeschrumpfende Manschette entsteht. Dieses Recken um 200 % bis 700 % im rechten Winkel zu den Längskanten kann auch bei einer Temperatur erfolgen, die unterhalb und nicht oberhalb des Kristallitschmelzpunktes des PE-HD liegt, damit die wärmeschrumpfende Manschette entsteht.

Materialien wie "medium density polyethylene" (PE-MD), PE-HD oder Polyester oder Mischungen daraus oder auch andere polymere Materialien können auf die gewellte oder gefurchte Einlage aufgebracht und dann mittels Bestrahlung in einer Elektronenbestrahlungsanlage oder durch Gammastrahlen vernetzt werden, um zu verhindern, daß sie während des Schrumpfvorganges schmelzen oder abfließen.

Zur Herstellung von wärmeschrumpfenden Manschetten können auch mehrere Lagen gewellter oder gefurchter Schichten verwendet werden. Diese Schichten können sich direkt berühren oder über das die Matrix bildende Polymer oder einen Kleber miteinander verbunden sein.

Die kabelseitige Oberfläche der wärmeschrumpfenden Manschette ist mit einer 0,1 mm bis 1,0 mm dicken Lage eines Hochleistungsklebers 6 beschichtet. Bei dem Kleber handelt es sich vorzugsweise um einen Heißschmelzkleber, wie solche auf Polyamid- oder Ethylen-Vinyl-Acetat-Copolymer-Basis. Während des Schrumpfvorganges schmilzt der Kleber und bildet dadurch eine Dichtung zwischen der wärmeschrumpfenden Manschette und dem Substrat, zum Beispiel einem Kabel 3.

In Verbindung mit der wärmeschrumpfenden Manschette wird ein Spleißschutz 1 (Figur 1) verwendet. Der Spleißschutz 1 besteht vorzugs- aber nicht notwendigerweise aus fester Pappe oder einem ähnlichen Material, bei dem in Längsrichtung Falten in einem seitlichen Abstand von jeweils ca. 20 mm verlaufen, um ein ordentliches Umwickeln der reparierten Verbindungsstelle am Kabel zu erleichtern. Die Enden des Spleißschutzes sind in Form von langen schmalen Dreiecken gezackt, so daß sie an jedem Ende eine Krone bilden und damit den Übergang vom maximalen Durchmesser der Verbindungsstelle auf die aus- und eintretenden Kabel auf leichte Weise ausgleichen, wie in Figur 1 gezeigt wird. Um die Luftdichtigkeit des die Verbindungsstelle umgebenden Systems weiter zu verbessern, kann der Spleißschutz 1 mit einer vorzugsweise 0,05 mm bis 1,00 mm dicken Schicht aus einem luftundurchlässigen Polymer, beschichtet werden. Um eine Manschette in Sandwich-Bauweise herzustellen, können die Beschichtungen der wärmeschrumpfenden gewellten Einlage auch aus anderen Materialien als PE-LD gefertigt werden. Zu diesen gehören zum Beispiel: Ethylen-Vinyl-Acetat-Copolymer, Ethylen-Ethyl-Acrylat-Copolymer, PE-LLD (linear low density polyethylene), PE-VLD (very low density polyethylene), Vinylidenchlorid und Acrylnitril oder ein Copolymer aus Vinylidenchlorid und Vinylchlorid.

Um die Spleißumhüllung unter Druck zu setzen, wird ein Luftventil in ein Loch eingesetzt, das durch die Manschette und den Spleißschutz gebohrt wurde, und durch konventionelle Methoden in der eingesetzten Lage abgedichtet, um eine luftundurchlässige Dichtung zu bilden.

### Beispiel 1

100 Gewichtsanteile eines PE-HD (Dichte = 0,961 g/cm³, MFI (190/2,16) = 16 g/10 min) wurden in einem Zweiwalzenmischwerk mit 2,0 Teilen Corax P, 2,0 Teilen Flectol-H, 0,5 Teilen Dilaurylthiodipropionat und 5,0 Teilen Triallylcyanurat vermischt. Die sich daraus ergebende Mischung wurde granuliert und danach als Profil mit einer Breite von 48 mm und einer Dicke von 2,5 mm und den kontinuierlichen Aufwölbungen an beiden Längskanten extrudiert.

Das Extrudat wurde dann im rechten Winkel zu seinen Längskanten auf eine Breite von 170 mm gereckt. Das Aufbringen der Wellen erfolgte unmittelbar danach. Beide Arbeitsgänge wurden bei einer Temperatur unterhalb des Kristallitschmelzpunktes des Polymers durchgeführt. Die Wellen verlaufen im rechten Winkel zu den Längskanten. Das Profil der Wellen war, wie in Figur 3 dargestellt ist, dreieckig und der Abstand zwischen den Wellenbergen betrug jeweils 15 mm und die Gesamtdicke 5,5 mm.

Das gewellte Extrudat wurde durch Gammastrahlen mit einer Dosis von 10 Mrad vernetzt, um die gewünschte wärmeschrumpfende gewellte Einlage zu erhalten.

100 Teile PE-LD (Dichte = 0,961 g/cm³, MF I (190/2,16) = 20 g/10 min.) wurden in einem Zweiwalzenmischwerk mit 2,0 Teilen Corax P, 2,0 Teilen Irganox 1010 und 1,0 Teil Dilaurylthiodipropionat vermischt. Die sich daraus ergebende Mischung wurde granuliert und als eine 1,0 mm dicke Schicht extrudiert.

Ein 450 mm langes Stück davon wurde bei 155° C in einer Presse zwischen PTFE-belegten Platten auf die beiden gewellten Oberflächen der wärmeschrumpfenden Einlage gepreßt, um diese vollständig zu bedecken. Die sich daraus ergebende mehrschichtige Konstruktion wurde in der Presse auf Raumtemperatur abgekühlt und danach mit einer Dosis von 3 Mrad bestrahlt. Die Innenseite wurde mit einer 0,4 mm dicken Schicht aus Polyamid-Heißschmelzkleber beschichtet. Dann wurde ein Luftventil montiert und eine wärmeschrumpfende Manschette war hergestellt.

Eine Verbindungsstelle bei einem mit Polyethylen ummantelten Nachrichtenkabel wurde, wie in Figur 1 gezeigt, mit einem Spleißschutz 1 aus Pappe umwickelt. Das Luftventil drang auch durch den Spleißschutz 1. Die langen dreieckigen Teile an den Enden des Spleißschutzes 1 ermöglichten einen glatten Übergang von der Verbindungsstelle auf das Kabel 3. Die mehrschichtige wärmeschrumpfende Manschette 4 mit den in Längsrichtung verlaufenden Aufwölbungen 5 wurde so über der Verbindungsstelle positioniert, daß die mit Heißschmelzkleber 6 beschichtete Seite mit der Verbindungsstelle in Berührung kam. Figur 2 zeigt die Manschette mit ihrer Außenschicht 4, deren Kanten durch die flexible Metallschiene 7 zusammengehalten werden, nach dem Schrumpfvorgang. Nach der Montage wurde die Verbindungsstelle durch das Luftventil mit 10 psi unter Druck gesetzt und 120 Temperaturzyklen zwischen - 40° C und + 60° C unterzogen, wobei jeder Zyklus acht Stunden dauerte. Nach dieser Prüfung wurde die umhüllte Verbindungsstelle mit 15 psi unter Druck gesetzt, in ein Wasserbad getaucht und 100 Zyklen zwischen 5° C und 50° C ausgesetzt. Der Druck in der Verbindung wurde anhand eines Manometers registriert, das an das Kabel angeschlossen war. Am Ende der Temperaturzyklen konnte kein Druckverlust und außerdem auch kein Kriechen festgestellt werden.

### Beispiel 2

Die oben erwähnte Prüfung wurde mit einer wärmeschrumpfenden gewellten Einlage gemäß Figur 4 wiederholt, bei der die nach oben gerichteten Wellenberge 9 von den nach unten gerichteten Wellentälern 10 durch einen nicht gewellten Teill 11 voneinander getrennt waren. Nach den Temperaturzyklen wurde kein Druckverlust und nur geringes Kriechen festgestellt.

### Beispiel 3

Die oben erwähnte Prüfung wurde mit einer wärmeschrumpfenden gewellten Einlage gemäß Figur 5 wiederholt, bei der die Wellen 12 durch einen nicht gewellten Teil 13 voneinander getrennt waren. Nach den Temperaturzyklen wurde kein Druckverlust und kein Kriechen festgestellt.

### Beispiel 4

100 Gewichtsanteile eines PE-HD (Dichte = 0,95 g/cm³, MF I (190/2,16) = 1,8 g/10 min.) wurden in einem Buss Ko Innenkneter mit 0,95 Teilen Ruß (Corax P), 1,75 Teilen Flectol H, 0,4 Teilen Dilaurylthiodipropionat und 6,0 Teilen Triallylcyanurat vermischt. Die sich daraus ergebende Mischung wurde nach Granulierung in einen Einschneckenextruder gegeben und als Profil mit einer Breite von 32 mm und einer Dicke von 2,0 mm extrudiert, wobei dieses Profil entlang jeder Längskante eine kontinuierliche Aufwölbung 5 (Figur 1) aufwies. Nach Austreten aus dem Extruder, wurde das Profil bei einer Temperatur oberhalb des Kristallitschmelzpunktes durch ein Wellsystem geschickt. Die Wellen wurden im rechten Winkel zu den Längskanten aufgebracht. Im Schnittbild waren die Wellen dreieckig geformt (Figur 3), mit einem Abstand von 9 mm zwischen den Wellenbergen. Der Abstand zwischen Wellentalunterseite und Wellenbergoberseite betrug 4,5 mm. Die so gewellte Einlage 14 wurde ungefähr auf Raumtemperatur abgekühlt. Dann wurde unter Verwendung eines Extruders mit Querkopf eine Schicht aus PE-LD-Compound jeweils auf die Ober- und Unterseite der Einlage aufgebracht, gerade ausreichend, um die Wellen vollständig zu füllen und gerade zu bedecken. Die durchschnittliche Dicke des somit entstandenen Sandwiches betrug 5,1 mm. Das verwendete PE-LD-Compound wurde aus 100 Teilen PE-LD (Dichte 0,915, MF I (190/2,16) = 18 g/10 min.) zusammen mit 2,0 Teilen Corax-P-Ruß, 2,0 Teilen Irganox 1010 und 1,0 Teil Dilaurylthiodipropionat durch Vermischung in einem Buss Ko Innenkneter hergestellt.

Das Polyethylen-Sandwich wurde durch Gammastrahlen mit einer Dosis von 12 Mrad vernetzt und bis oberhalb des Kristallitschmelzpunktes der gewellten Einlage aus PE-HD erhitzt. Es wurden dann Stücke von 1200 mm Länge im rechten Winkel zu den Längskanten bis auf eine Breite von 155 mm gereckt und im gereckten Zustand auf unter 80° C abgekühlt. Jedes Stück wurde dann mit einem Luftventil ausgestattet, damit eine Manschette entstand, deren Innenseite mit einer 0,35 mm dicken Schicht aus Polyamid-Heißschmelzkleber und Außenseite mit einer an sich bekannten Thermo-Umschlagfarbe beschichtet wurde.

Die Manschette wurde auf einem mit Polyehtylen ummantelten Kabel, wie in Beispiel 1 beschrieben, geprüft. Nach den Temperaturzyklen wurde kein Druckverlust und kein Kriechen festgestellt.

### Beispiel 5

Das in Beispiel 4 beschriebene Verfahren wurde wiederholt, mit der Ausnahme, daß nach Gamma-Bestrahlung des Sandwiches mit einer Dosis von 12 Mrad die 1200 mm langen Stücke (Breite 32 mm) bei einer Temperatur unterhalb des Kristallitschmelzpunktes des gewellten PE-HD auf eine Breite von 155 mm gereckt wurden, um die wärmeschrumpfende Manschette herzustellen. Nach den Temperaturzyklen wurde kein Druckverlust und kein Kriechen festgestellt.

### Beispiel 6

Die in Beispiel 4 und 5 beschriebenen Prüfungen wurden wiederholt. Statt des Spleißschutzes 1 aus fester Pappe über der Verbindungsstelle des Nachrichtenkabels wurde ein Halbschalen-Spleißschutz aus Aluminium verwendet, dessen schmale dreieckige Enden mit einer PVC-Schicht beschichtet waren. Nach den Temperaturzyklen wurde in beiden Fällen kein Druckverlust und kein Kriechen festgestellt.
- FLECTOL H: ist ein Alterungsschutzmittel und kann von Monsanto PLC bezogen werden.
- CORAX P: ist ein Ruß und kann von Degussa bezogen werden.
- IRGANOX 1010: ist ein Alterungsschutzmittel und kann von Ciba Geigy PLC bezogen werden.

## Patentansprüche

1. Wärmeschrumpfbare Umhüllung, insbesondere für Verbindungsstellen von Nachrichtenkabeln mit einer gewellten Einlage (14, 15, 16) und Aufwölbungen (5) mit Nuten an den Längskanten, in welche eine flexible Metallschiene (7) greift, die die Längskanten beim Schrumpfprozeß zusammenhält,
**dadurch gekennzeichnet,**
daß die gewellte Einlage (14, 15, 16) aus Kunststoff besteht und in Sandwich-Form zwischen zwei weiteren Kunststofflagen (2, 4) angeordnet ist und daß die Wellen (8, 9, 10, 12) quer über die gesamte Fläche der Einlage (14, 15, 16) zwischen den genuteten Aufwölbungen (5) an beiden Längskanten verlaufen.

2. Wärmeschrumpfbare Umhüllung nach Anspruch 1,
**dadurch gekennzeichnet,**
daß die gewellte Einlage (14, 15, 16) aus Polyolefin besteht.

3. Wärmeschrumpfbare Umhüllung nach einem der vorhergehenden Ansprüche,
**dadurch gekennzeichnet,**
daß der Abstand zwischen den Höhepunkten der Wellen (8, 9, 10, 12) zwischen 0,25 und 30 mm beträgt.

4. Wärmeschrumpfbare Umhüllung nach einem der vorhergehenden Ansprüche,
**dadurch gekennzeichnet,**
daß die Wellen (8, 9, 10, 12) parallel zueinander verlaufen.

5. Wärmeschrumpfbare Umhüllung nach einem der vorhergehenden Ansprüche,
**dadurch gekennzeichnet,**
daß die Wellen (8, 9, 10, 12) im Winkel von 90° zur Richtung (17) der Längskanten der gewellten Einlage (14, 15, 16) aus Polyolefin verlaufen.

6. Wärmeschrumpfbare Umhüllung nach einem der Ansprüche 1 bis 4,
**dadurch gekennzeichnet,**
daß die Wellen (8, 9, 10, 12) in einem beliebigen Winkel zur Richtung (17) der Längskanten der gewellten Einlage aus Polyolefin verlaufen.

7. Wärmeschrumpfbare Umhüllung nach einem der vorhergehenden Ansprüche,
**dadurch gekennzeichnet,**
daß sich die Wellen (8) vom oberen bis zum unteren Ende der Oberfläche der Einlage (14) durchgehend erstrecken und daß Wellenberg und Wellental jeweils abwechselnd direkt aufeinander folgen.

8. Wärmeschrumpfbare Umhüllung nach einem der Ansprüche 1 bis 6,
**dadurch gekennzeichnet,**
daß der Fortlauf von Wellenberg und Wellental unterbrochen ist.

9. Wärmeschrumpfbare Umhüllung nach Anspruch 8,
**dadurch gekennzeichnet,**
daß zwischen manchen Wellen (9, 10,12) ein lateraler Versatz (11, 13) eingefügt ist.

10. Wärmeschrumpfbare Umhüllung nach Anspruch 8,
**dadurch gekennzeichnet,**
daß zwischen Wellen (9, 10, 12) ein lateraler Versatz (11, 13) eingefügt ist.

11. Wärmeschrumpfbare Umhüllung nach einem der vorhergehenden Ansprüche,
**dadurch gekennzeichnet,**
daß die Wellen (8, 9, 10, 12) im zu der Längsrichtung der Wellen verlaufenden rechtwinkeligen Schnittbild dreieckig geformt sind.

12. Wärmeschrumpfbare Umhüllung nach einem der Ansprüche 1 bis 10,
**dadurch gekennzeichnet,**
daß die Wellen im zu der Längsrichtung der Wellen verlaufenden rechtwinkligen Schnittbild parabolisch geformt sind.

13. Wärmeschrumpfbare Umhüllung nach einem der Ansprüche 1 bis 10,
**dadurch gekennzeichnet,**
daß die Wellen im zu der Längsrichtung der Wellen verlaufenden rechtwinkligen Schnittbild eine aus Kreisbögen zusammengesetzte Form aufweisen.

14. Wärmeschrumpfbare Umhüllung nach einem der Ansprüche 1 bis 10,
**dadurch gekennzeichnet,**
daß die Wellenform im zu der Längsrichtung der Wellen verlaufenden rechtwinkligen Schnittbild eine Kombination aus verschiedenen Formen ist.

15. Wärmeschrumpfbare Umhüllung nach einem der Ansprüche 1 bis 10,
**dadurch gekennzeichnet,**
daß die Wellen im zu der Längsrichtung der Wellen verlaufenden rechtwinkligen Schnittbild eine unregelmäßige Form aufweisen.

16. Wärmeschrumpfbare Umhüllung nach einem der vorhergehenden Ansprüche,
**dadurch gekennzeichnet,**
daß die gewellte Einlage (14, 15, 16) aus Polyolefin vernetzt ist.

17. Wärmeschrumpfbare Umhüllung nach einem der vorhergehenden Ansprüche,
**dadurch gekennzeichnet,**
daß die gewellte Einlage (14, 15, 16) aus Polyolefin wärmeschrumpffähig ist.

18. Wärmeschrumpfbare Umhüllung nach einem der vorhergehenden Ansprüche,
**dadurch gekennzeichnet,**
daß die Wellenformen der Einlage (14, 15, 16) aus Polyolefin vollständig mit einem homogenen polymeren Material (2, 4) gefüllt sind, um ein Laminat zu bilden.

19. Wärmeschrumpfbare Umhüllung nach einem der Ansprüche 1 bis 17,
**dadurch gekennzeichnet,**
daß die Wellen der Einlage aus Polyolefin teilweise mit einem homogenen polymeren Material (2, 4) gefüllt sind, um ein Laminat zu bilden.

20. Wärmeschrumpfbare Umhüllung nach einem der Ansprüche 18 oder 19,
**dadurch gekennzeichnet,**
daß das homogene polymere Material (2, 4) zur vollständigen oder teilweisen Füllung der Wellen der Einlage (14, 15, 16) in Sandwich-Form aus Polyolefin eine Reißdehnung aufweist, die mindestens so groß ist wie diejenige der gewellten Einlage (14, 15, 16).

21. Wärmeschrumpfbare Umhüllung nach einem der Ansprüche 18 bis 19,
**dadurch gekennzeichnet,**
daß das homogene polymere Material (2, 4) zur vollständigen oder teilweisen Füllung der Wellen der Einlage (14, 15, 16) in Sandwich-Form aus Polyolefin nach seiner Einbringung in die Wellen vernetzt ist.

22. Wärmeschrumpfbare Umhüllung nach Anspruch 21,
**dadurch gekennzeichnet,**
daß das polymere Material (2, 4) wärmeschrumpffähig ist.

23. Wärmeschrumpfbare Umhüllung nach einem der vorhergehenden Ansprüche,
**dadurch gekennzeichnet,**
daß sie als umwickelbare Umhüllung ausgebildet ist.

24. Wärmeschrumpfbare Umhüllung nach einem der vorhergehenden Ansprüche,
**dadurch gekennzeichnet,**
daß auf der Innenseite ein auf Wärme reagierender Kleber angeordnet ist.

25. Wärmeschrumpfbare Umhüllung nach einem der vorhergehenden Ansprüche,
**dadurch gekennzeichnet,**
daß die Außenseite mit einer Thermoumschlagfarbe versehen ist, die sich bei Erhitzen farblich verändert und somit das Schrumpfen der Umhüllung und die Aktivierung des auf der Innenseite befindlichen wärmeaktiven Klebers anzeigt.

26. Verbindungsanordnung nach einem der vorhergehenden Ansprüche,
**dadurch gekennzeichnet,**
daß eine wärmeschrumpfbare Umhüllung nach einem der vorhergehenden Ansprüche über länglichen Substraten angeordnet ist.

27. Verbindungsanordnung nach Anspruch 26,
**dadurch gekennzeichnet,**
daß die Substrate elektrische Kabel darstellen.

28. Verbindungsanordnung nach Anspruch 26,
**dadurch gekennzeichnet,**
daß die Substrate Nachrichtenkabel darstellen.

29. Verbindungsanordnung nach Anspruch 26,
**dadurch gekennzeichnet,**
daß die Substrate drucküberwachte Kabel darstellen.

## Claims

1. Heat-shrinkable covering, preferably for joints of communication cables, having a corrugated insert (14, 15, 16) and bulges (5) with grooves on the longitudinal edges, into which there engages a flexible metal rail (7), which holds the longitudinal edges together during the shrinking process, characterized in that the corrugated insert (14, 15, 16) consists of plastic and is arranged in sandwich form between two further plastic layers (2, 4) and in that the corrugations (8, 9, 10, 12) run transversely over the entire surface area of the insert (14, 15, 16) between the grooved bulges (5) on both longitudinal edges.

2. Heat-shrinkable covering according to Claim 1, characterized in that the corrugated insert (14, 15, 16) consists of polyolefin.

3. Heat-shrinkable covering according to one of the preceding claims, characterized in that the distance between the tops of the corrugations (8, 9, 10, 12) is between 0.25 and 30 mm.

4. Heat-shrinkable covering according to one of the preceding claims, characterized in that the corrugations (8, 9, 10, 12) run parallel to one another.

5. Heat-shrinkable covering according to one of the preceding claims, characterized in that the corrugations (8, 9, 10, 12) run at an angle of 90° with respect to the direction (17) of the longitudinal edges of the corrugated insert (14, 15, 16) of polyolefin.

6. Heat-shrinkable covering according to one of Claims 1 to 4, characterized in that the corrugations (8, 9, 10, 12) run at any desired angle with respect to the direction (17) of the longitudinal edges of the corrugated insert of polyolefin.

7. Heat-shrinkable covering according to one of the preceding claims, characterized in that the corrugations (8) extend continuously from the upper end to the lower end of the surface of the insert (14) and in that corrugation crest and corrugation trough respectively follow one another directly in alternation.

8. Heat-shrinkable covering according to one of Claims 1 to 6, characterized in that the progression of corrugation crest and corrugation trough is interrupted.

9. Heat-shrinkable covering according to Claim 8, characterized in that a lateral offset (11, 13) is introduced between some corrugations (9, 10, 12).

10. Heat-shrinkable covering according to Claim 8, characterized in that a lateral offset (11, 12) is introduced between all the corrugations (9, 10, 12).

11. Heat-shrinkable covering according to one of the preceding claims, characterized in that the corrugations (8, 9, 10, 12) are shaped triangularly in a sectional view at right angles with respect to the longitudinal direction of the corrugations.

12. Heat-shrinkable covering according to one of Claim 1 to 10, characterized in that the corrugations are shaped parabolically in a sectional view at right angles with respect to the longitudinal direction of the corrugations.

13. Heat-shrinkable covering according to one of Claims 1 to 10, characterized in that the corrugations have a form composed of arcs of a circle in a sectional view at right angles with respect to the longitudinal direction of the corrugations.

14. Heat-shrinkable covering according to one of Claims 1 to 10, characterized in that the form of the corrugations in a sectional view at right angles with respect to the longitudinal direction of the corrugations is a combination of various shapes.

15. Heat-shrinkable covering according to one of Claims 1 to 10, characterized in that the corrugations have an irregular form in a sectional view at right angles with respect to the longitudinal direction of the corrugations.

16. Heat-shrinkable covering according to one of the preceding claims, characterized in that the corrugated insert (14, 15, 16) of polyolefin is crosslinked.

17. Heat-shrinkable covering according to one of the preceding claims, characterized in that the corrugated insert (14, 15, 16) of polyolefin is capable of heat shrinkage.

18. Heat-shrinkable covering according to one of the preceding claims, characterized in that the forms of the corrugations of the insert (14, 15, 16) of polyolefin are filled completely with a homogeneous polymeric material (2, 4) in order to form a laminate.

19. Heat-shrinkable covering according to one of Claims 1 to 17, characterized in that the corrugations of the insert of polyolefin are partially filled with a homogeneous polymeric material (2, 4) in order to form a laminate.

20. Heat-shrinkable covering according to one of Claims 18 or 19, characterized in that the homogeneous polymeric material (2, 4) for completely or partially filling the corrugations of the insert (14, 15, 16) in sandwich form of polyolefin has an elongation at break which is at least as great as that of the corrugated insert (14, 15, 16).

21. Heat-shrinkable covering according to one of Claims 18 to 19, characterized in that the homogeneous polymeric material (2, 4) for completely or partially filling the corrugations of the insert (14, 15, 16) in sandwich form of polyolefin is crosslinked after being introduced into the corrugations.

22. Heat-shrinkable covering according to Claim 21, characterized in that the polymeric material (2, 4) is capable of heat shrinkage.

23. Heat-shrinkable covering according to one of the preceding claims, characterized in that it is designed as a wrap-around covering.

24. Heat-shrinkable covering according to one of the preceding claims, characterized in that a heat-reactive adhesive is arranged on the inside.

25. Heat-shrinkable covering according to one of the preceding claims, characterized in that the outside is provided with a thermally colour-changing coating which changes it colour when heated and consequently indicates a shrinking of the covering and the activation of the heat-reactive adhesive on the inside.

26. Joint arrangement according to one of the preceding claims, characterized in that a heat-shrinkable covering according to one of the preceding claims is arranged over elongate substrates.

27. Joint arrangement according to Claim 26, characterized in that the substrates are electric cables.

28. Joint arrangement according to Claim 26, characterized in that the substrates are communication cables.

29. Joint arrangement according to Claim 26, characterized in that the substrates are pressure-monitored cables.

## Revendications

1. Enveloppe thermorétractable, notamment pour des points de liaison de câbles de télécommunication, comprenant un insert (14,15,16) ondulé et des parties incurvées (5) ayant des gorges sur les bords longitudinaux, dans lesquelles pénètre une bande (7) métallique souple, qui maintient ensemble les bords longitudinaux lors du processus de retrait,
caractérisé
en ce que les inserts (14,15,16) ondulés sont en matière plastique et sont disposés sous forme de sandwich entre deux autres couches (2,4) de matière plastique et en ce que les ondulations (8,9,10,12) s'étendent sur les deux côtés longitudinaux transversalement sur toute la surface de l'insert (14,15,16) entre les parties incurvées (5) munies de gorges.

2. Enveloppe thermorétractable suivant la revendication 1,
caractérisée
en ce que les inserts (14,15,16) ondulés sont en polyoléfine.

3. Enveloppe thermorétractable suivant l'une des revendications précédentes,
caractérisée
en ce que la distance entre les sommets des ondulations (8, 9,10,12) est comprise entre 0,25 et 30 mm.

4. Enveloppe thermorétractable suivant l'une des revendications précédentes,
caractérisée
en ce que les ondulations (8,9,10,12) s'étendent parallèlement entre elles.

5. Enveloppe thermorétractable suivant l'une des revendications précédentes,
caractérisée
en ce que les ondulations (8,9,10,12) s'étendent en faisant un angle de 90° avec la direction (17) des bords longitudinaux des inserts (14,15,16) ondulés en polyoléfine.

6. Enveloppe thermorétractable suivant l'une des revendications 1 à 4,
caractérisée
en ce que les ondulations s'étendent en faisant un angle quelconque avec la direction (17) des bords longitudinaux des inserts ondulés en polyoléfine.

7. Enveloppe thermorétractable suivant l'une des revendications précédentes,
caractérisée
en ce que les ondulations s'étendent continûment de l'extrémité supérieure à l'extrémité inférieure de la surface de l'insert (14) et en ce que les sommets et les fonds des ondulations se succèdent directement de manière alternée.

8. Enveloppe thermorétractable suivant l'une des revendications 1 à 6,
caractérisée
en ce que la succession des sommets et des fonds des ondulations est interrompue.

9. Enveloppe thermorétractable suivant la revendication 8,
caractérisée
en ce qu'un déport (11,13) latéral est inséré entre de nombreuses ondulations (9,10,12).

10. Enveloppe thermorétractable suivant la revendication 8,
caractérisée
en ce qu'un déport (11,13) latéral est inséré entre des ondulations (9,10,12).

11. Enveloppe thermorétractable suivant l'une des revendications précédentes,
caractérisée
en ce que les ondulations (8,9,10,12) sont de forme triangulaire dans la vue en coupe s'étendant perpendiculairement à la direction longitudinale des ondulations.

12. Enveloppe thermorétractable suivant l'une des revendications 1 à 10,
caractérisée
en ce que les ondulations sont de forme parabolique dans la vue en coupe s'étendant perpendiculairement à la direction longitudinale des ondulations.

13. Enveloppe thermorétractable suivant l'une des revendications 1 à 10,
caractérisée
en ce que les ondulations sont de forme composée d'arcs de cercle dans la vue en coupe s'étendant perpendiculairement à la direction longitudinale des ondulations.

14. Enveloppe thermorétractable suivant l'une des revendications 1 à 10,
caractérisée
en ce que la forme des ondulations dans la vue en coupe s'étendant perpendiculairement à la direction longitudinale des ondulations est composée d'une combinaison de forme différente.

15. Enveloppe thermorétractable suivant l'une des revendications 1 à 10,
caractérisée
en ce que les ondulations ont, dans la vue en coupe s'étendant perpendiculairement à la direction longitudinale des ondulations, une forme irrégulière.

16. Enveloppe thermorétractable suivant l'une des revendications précédentes,
caractérisée
en ce que l'insert (14,15,16) ondulé en polyoléfine est réticulé.

17. Enveloppe thermorétractable suivant l'une des revendications précédentes,
caractérisée
en ce que l'insert (14,15,16) ondulé en polyoléfine est rétracté à chaud.

18. Enveloppe thermorétractable suivant l'une des revendications précédentes,
caractérisée
en ce que les formes des ondulations de l'insert (14,15,16) en polyoléfine sont emplies entièrement d'une matière (2,4) polymère homogène pour former un stratifié.

19. Enveloppe thermorétractable suivant l'une des revendications 1 à 17,
caractérisée
en ce que les ondulations de l'insert en polyoléfine sont emplies partiellement d'une matière (2,4) polymère homogène pour former un stratifié.

20. Enveloppe thermorétractable suivant l'une des revendications 18 ou 19, caractérisée en ce que la matière (2,4) polymère homogène pour emplir en tout ou partie les ondulations de l'insert (14,15,16) sous forme de stratifié en polyoléfine a un allongement à la rupture qui est au moins aussi grand que celui de l'insert (14,15,16) ondulé.

21. Enveloppe thermorétractable suivant l'une des revendications 18 à 19,
caractérisée
en ce que la matière (2,4) polymère homogène pour emplir en tout ou partie les ondulations de l'insert (14,15,16) sous forme stratifiée en polyoléfine est réticulée après son introduction dans les ondulations.

22. Enveloppe thermorétractable suivant la revendication 21
caractérisée
en ce que la matière (2,4) polymère est thermorétractable.

23. Enveloppe thermorétractable suivant l'une des revendications précédentes,
caractérisée
en ce qu'elle est constituée sous la forme d'une enveloppe enroulable.

24. Enveloppe thermorétractable suivant l'une des revendications précédentes,
caractérisée
en ce que sur la face intérieure est prévue une colle réagissant à la chaleur.

25. Enveloppe thermorétractable suivant l'une des revendications précédentes,
caractérisée
en ce que la face extérieure est munie d'un colorant virant à la chaleur, qui change de couleur par chauffage et qui indique ainsi le retrait de l'enveloppe et la mise en action de la colle active à chaud se trouvant sur la face intérieure.

26. Enveloppe thermorétractable suivant l'une des revendications précédentes,
caractérisée
en ce qu'une enveloppe thermorétractable suivant l'une des revendications précédentes est placée sur des substrats oblongs.

27. Enveloppe thermorétractable suivant la revendication 26,
caractérisée
en ce que les substrats constituent des câbles électriques.

28. Enveloppe thermorétractable suivant la revendication 26,
caractérisée
en ce que les substrats constituent des câbles de télécommunication.

29. Enveloppe thermorétractable suivant la revendication 26,
caractérisée
en ce que les substrats constituent des câbles dont la pression doit être surveillée.
